Europäisches Patentamt

European Patent Office

Office européen des brevets

(19)

(11) Veröffentlichungsnummer: **0 002 422**
**B1**

(12) # EUROPÄISCHE PATENTSCHRIFT

(45) Veröffentlichungstag der Patentschrift:
**02.09.81**

(51) Int. Cl.³: **B 01 D 13/00**, B 01 D 31/00,
B 01 D 53/22, C 02 F 1/52

(21) Anmeldenummer: **78810022.0**

(22) Anmeldetag: **15.11.78**

(54) Vorrichtung für die Filtration.

(30) Priorität: **01.12.77 CH 14689/77**

(43) Veröffentlichungstag der Anmeldung:
**13.06.79 Patentblatt 79/12**

(45) Bekanntmachung des Hinweises auf die Patenterteilung:
**02.09.81 Patentblatt 81/35**

(84) Benannte Vertragsstaaten:
**BE DE FR GB LU NL SE**

(56) Entgegenhaltungen:
**FR-A-1 412 837**
**FR-A-2 153 334**
**FR-A-2 203 664**
**FR-A-2 332 043**
**US-A-2 797 812**
**US-A-3 398 833**
**US-A-3 456 805**
**US-A-3 410 058**

(73) Patentinhaber: **KILCHER-CHEMIE AG,**
**Steinackerweg 19, CH-4565 Recherswil (CH)**

(72) Erfinder: **Proeiss, Ludwig, Grederstrasse 62/5,**
**CH-4512 Bellach (CH)**

(74) Vertreter: **Seehof, Michel et al, c/o AMMANN**
**PATENTANWAELTE AG BERN Schwarztorstrasse 31,**
**CH-3001 Bern (CH)**

BUNDESDRUCKEREI BERLIN

## Vorrichtung für die Filtration

Die vorliegende Erfindung bezieht sich auf eine Vorrichtung für die Filtration, mit scheibenförmigen Filterelementen, die axial aufeinandergestapelt und innerhalb eines rohrförmigen Mantels konzentrisch um ein Filtratsammelrohr angeordnet sind und mit je einem parallel zum Filtratsammelrohr verlaufenden Einspeis- und Abflußrohr mit Öffnungen versehen sind.

Eine solche Vorrichtung ist aus der US-Patentschrift 3 410 058 bekannt, wobei diese Vorrichtung für die Reinigung von Wasserstoff gedacht ist. Dabei wird das Gas eingelassen und der Wasserstoff diffundiert durch die nichtporösen Filterelemente. Eine solche Vorrichtung ist jedoch für die Ultrafiltration und Umkehrosmose nicht geeignet, da dabei hohe Drücke verwendet werden müssen. Außerdem sind die darin erwähnten nichtporösen Membranen für die vorgesehene Art von Filtration nicht geeignet.

Die bei der Ultrafiltration und Umkehrosmose verwendeten, extrem feinporigen Filtermembranen erfordern bei ihrer industriellen Anwendung hohe Drücke und große Oberflächen. Aus konstruktiven und wirtschaftlichen Erwägungen heraus besteht daher der Wunsch, möglichst viel Filterfläche in einer möglichst kompakten Druckkammer anzuordnen. Um eine Verstopfung der Poren, bzw. die Salzpolarisation zu vermeiden, wird die zu filtrierende Flüssigkeit mit großer Strömungsgeschwindigkeit, d. h. im turbulenten Zustand parallel zur Membranoberfläche vorbeigeführt, so daß angeschwemmte Partikel von kolloider bis Molekülgröße stets von der Membran entfernt werden. Bei dieser sogenannten Querstromfiltration führt man üblicherweise die Flüssigkeit mehrmals im Kreislauf an den Filtermembranen vorbei, bis sie zu einer bestimmten Grenze aufkonzentriert ist.

Für die Querstromfiltration verwendet man im allgemeinen rohrförmige Filterelemente, die den Vorteil haben, einen niedrigen Druckabfall aufzuweisen, aber pro Einheit eine geringe Filterfläche aufweisen. Außerdem ist die Herstellung von rohrförmigen Membranen mit gleichförmigem Porendurchmesser recht schwierig und die Verwendung von hohen Drücken erfordert eine hohe Wandstärke der Filterelemente sowie eine begrenzte Auswahl von Materialien.

Es wurde daher die Anwendung von scheibenförmigen Filterelementen für die Querstromfiltration vorgeschlagen. In den US-Patentschriften 3 456 805 und 3 398 833 sind die Filterelemente in Form einer Labyrinthdichtung angeordnet, derart, daß das zu filtrierende Medium um die einzelnen Filterelemente strömt und dadurch jeweils eine Umlenkung um 180° erfährt. Dadurch ist aber der Druckabfall sehr groß und die Ausbeute nicht sehr hoch, wobei sie von Filterpaket zu Filterpaket abnimmt. Aus der FR-A 2 153 334 ist ein Filterpaket bekannt, das scheibenförmige Filterelemente aufweist, die mit einer drehbaren Hohlwelle verbunden sind. Die Trübe gelangt von oben auf das Filterpaket, wobei das Filtrat in der zentralen Hohlwelle gesammelt wird, während die konzentrierte Trübe aus einem Ausfluß unten wieder abfließt. Diese Vorrichtung ist jedoch aufwendig gebaut, insbesondere wegen den auftretenden Problemen bei der Abdichtung der rotierenden Hohlwelle.

Es ist Aufgabe der vorliegenden Erfindung, eine Vorrichtung anzugeben, die insbesondere bei der Filtration von Flüssigkeiten einen großen Wirkungsgrad aufweist und einen einfachen und daher wirtschaftlichen Aufbau zeigt.

Die Erfindung wird nun im folgenden anhand einer Zeichnung eines Ausführungsbeispiels näher erläutert. Es zeigt

Fig. 1 im Schnitt eine erfindungsgemäße Vorrichtung,

Fig. 2 die geöffnete Vorrichtung in Draufsicht,

Fig. 3 eine Ausschnittsvergrößerung aus Fig. 1,

Fig. 4 eine weitere Ausschnittsvergrößerung von Fig. 1,

Fig. 5 schematisch und nicht maßstabsgerecht den Aufbau eines Filterelementes und

Fig. 6 schematisch den Strömungsverlauf der zu filtrierenden Flüssigkeit.

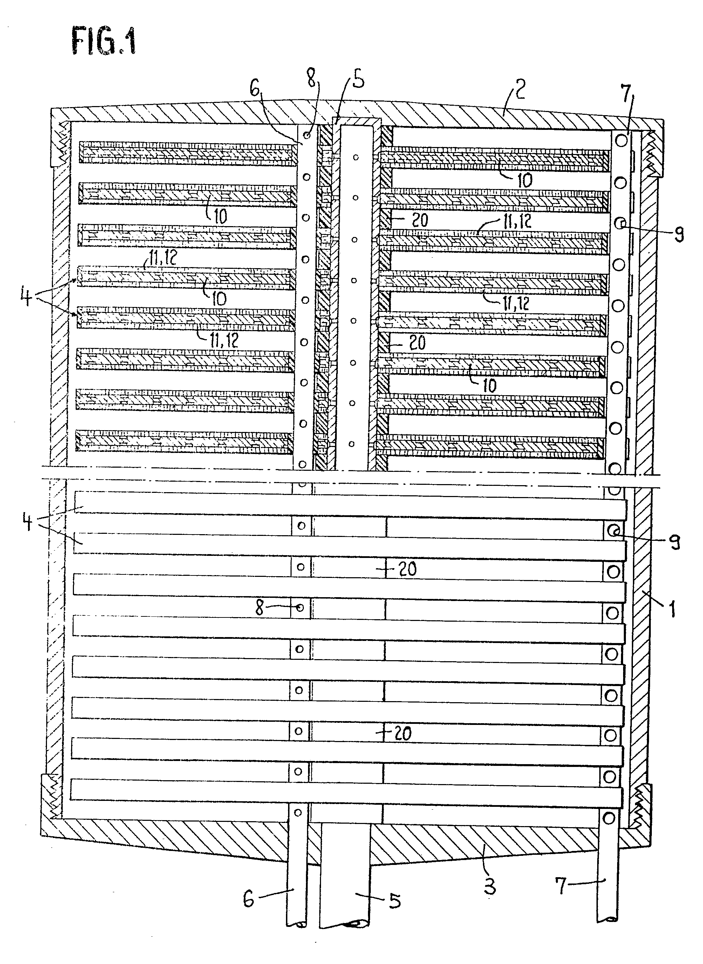

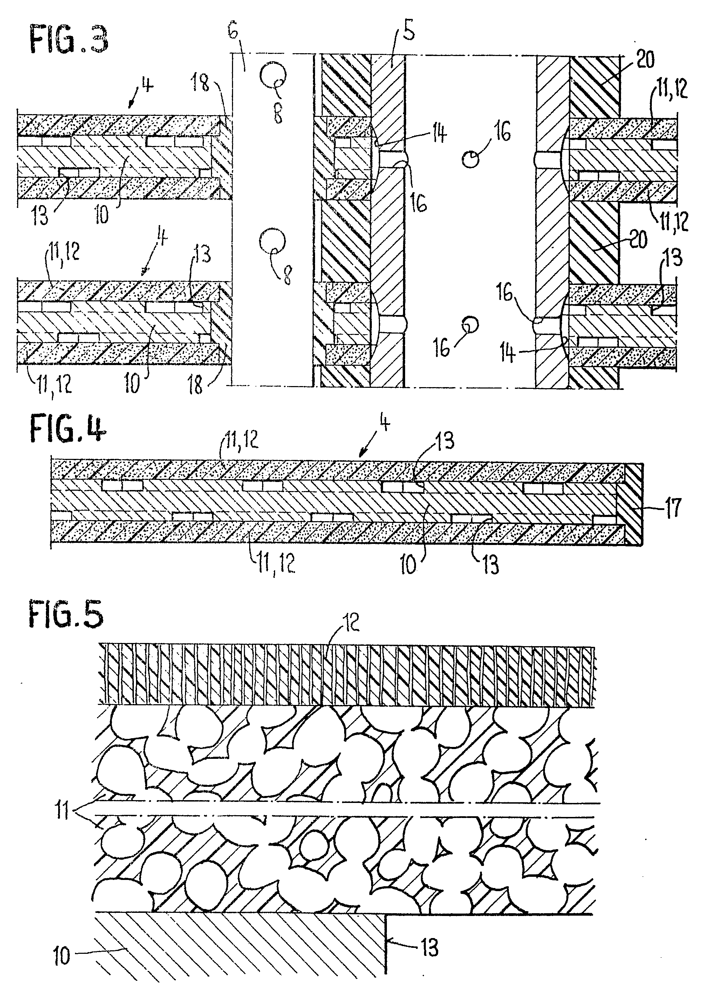

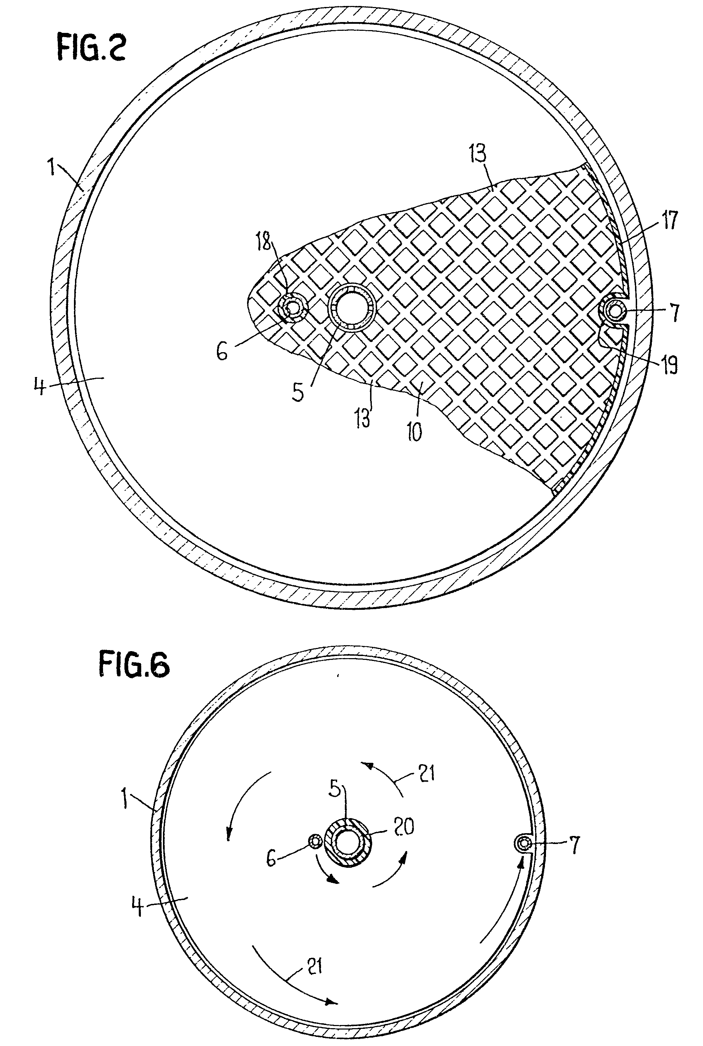

In Fig. 1 erkennt man den rohrförmigen Mantel 1 und die beiden Verschlüsse 2 und 3, die scheibenförmigen Filterelemente 4, das zentrale Filtratsammelrohr 5, das in der Nähe des Zentrums gelegene Einspeisrohr 6 und das peripher gelegene Abflußrohr 7. Das zentral gelegene Einspeisrohr 6 weist zwischen den Filterelementen 4 angeordnete, relativ kleine Öffnungen 8 auf, während die ebenfalls sich zwischen den Filterelementen 4 befindlichen Öffnungen 9 am Abflußrohr größer als die Öffnungen 8 am Einspeisrohr sind. Die zu filtrierende Flüssigkeit tritt, wie in Fig. 6 angedeutet, tangential aus den Öffnungen des Einspeisrohres 6 aus, gerät in Rotation und strömt spiralförmig auf der Oberfläche des Filterelementes 4 zur Öffnung 9 des Abflußrohres 7. Dabei dringt ein Teil quer zur Strömungsrichtung durch das Filter und das Filtrat gelangt in das Sammelrohr 5, wo es abgeführt wird. Infolge der teilweise hohen Drücke, die verwendet werden, über 50 bar, ist es unerläßlich, die Filterelemente stabil und druckresistent aufzubauen. Das scheibenförmige Filterelement 4 besteht, wie es insbesondere aus den Fig. 3 bis 5 hervorgeht, im wesentlichen aus drei Schichten, nämlich aus dem in vorliegendem Beispiel etwa 2 mm dicken Mittelteil 10, aus Kunststoff oder Metall, aus einer beidseitig angebrachten Schicht 11 von etwa 1 mm Dicke aus einem Kunststoff, beispielsweise Polyäthylen, mit einer Porenweite von ungefähr 40 μm und je einer auf dieser porösen Kunststoffschicht angebrachten mikroporösen Membran 12 mit einer Porenweite von beispielsweise 1 − 100 nm. Die Herstellung derartiger Membrane mit sehr geringen Porenweiten wird in der DE-A 78 810 003 der gleichen Anmelderin beschrieben. Um das Filtrat zu sammeln und zum zentralen Sammelrohr 5 zu leiten, sind im Mittelteil 10 Kanäle 13 angeordnet, die wie in Fig. 2 angedeutet, einen rechteckigen Querschnitt aufweisen können und schachbrettartig angeordnet sind, wobei sich diese Kanäle auf beiden Seiten des Mittelteils befinden. Das Filtrat gelangt aus den Kanälen 13 in eine umlaufende Sammelrinne 14, von dort durch Öffnungen 16 ins Filtratsammelrohr der Filterelemente 4. Sowohl der äußere Rand als auch der Durchbruch für das Einspeisrohr bzw. Abflußrohr, sind durch einen äußeren Abschlußring 17 und zwei innere Abschlußringe 18 und 19 abgedichtet, wobei diese Ringe verschweißt oder mittels eines geeigneten Kunststoffklebers mit den Filterelementen verbunden werden. Zwischen den Filterelementen befinden sich Distanzstücke 20, welche mit den Filterelementen dichtend verbunden sind.

Gemäß vorliegendem Beispiel wird mittels einer hier nicht gezeigten Anlage die Flüssigkeit unter Druck gesetzt, beispielsweise 50 bar, und durch das Einspeisrohr 6, respektive deren Öffnungen 8, wie in Fig. 6 durch die Pfeile 21 angedeutet, tangential eingespeist. Diese Vorrichtung arbeitet also nach dem sogenannten Zyklonprinzip. Dieses Zyklonprinzip arbeitet jedoch auch umgekehrt, d. h. man kann ebenso gut das periphere Rohr 7 als Einspeisrohr verwenden, mit den entsprechend kleineren Öffnungen, und das zentral gelegene Rohr 6 als Abflußrohr, mit den entsprechend größeren Öffnungen, verwenden. Falls die zu filtrierende Flüssigkeit tangential vom peripheren Rohr eingespeist wird, bildet sich ein ähnlicher spiralförmiger Verlauf wie beim ersten Beispiel. Dabei kann es je nach Art der zu filtrierenden Flüssigkeit vorteilhaft sein, mehrere Einspeisbzw. Abflußrohre vorzusehen. Die beidseitig des Mittelteils angebrachten Kanäle können auch V-förmig oder andersartig ausgebildet sein und müssen nicht notwendigerweise ein schachbrettartiges Muster aufweisen.

Je nach Art der zu filtrierenden Flüssigkeit oder ob das Filtrat oder das Konzentrat das gewünschte Endprodukt ist, wird man die Flüssigkeit in einer Vorrichtung im Kreislauf zirkulieren kassen, bis die gewünschte Menge des Filtrats oder Kondensats erhalten worden ist oder man wird eine Anzahl solcher Vorrichtungen in Serie schalten, was infolge des geringen Druckabfalls bei dieser Vorrichtung ohne weiteres möglich ist. Dieser geringe Druckabfall ermöglicht eine wesentliche Herabsetzung der für die Filtration benötigten Energie, so daß solche Vorrichtungen insbesondere auch für die Meerwasserentsalzung verwendet werden können.

Der rohrförmige Mantel 1 ist zweckmäßigerweise aus Stahl gerfertigt, um dem in der Vorrichtung herrschenden hohen Druck standzuhalten, und es ist vorteilhaft, diesen Mantel wenigstens innen mit einer Kunststoffschicht auszukleiden.

Die oben beschriebene Vorrichtung ist nicht nur für die Filtration von Flüssigkeiten, sondern auch für die Behandlung von gasförmigen Stoffen, wie die Anreicherung von niedrig viskosen Gasen geeignet.

## Patentansprüche

1. Vorrichtung für die Filtration, mit scheibenförmigen Filterelementen, die axial aufeinandergestapelt und innerhalb eines rohrförmigen Mantels konzentrisch um ein Filtratsammelrohr angeordnet sind und mit je einem parallel zum Filtratsammelrohr verlaufenden Einspeis- und Abflußrohr mit Öffnungen versehen sind, dadurch gekennzeichnet, daß das Einspeis- und Abflußrohr (6 bzw. 7) mit mindestens je einer Öffnung (8 bzw. 9) pro Filterelement (4) versehen sind, wobei das Einspeisrohr derart ausgebildet ist, daß der zu filtrierende Stoff durch das beim Filtratsammelrohr (5) angeordnete Einspeisrohr (6) tangential eingespeist wird und auf den eine mikroporöse Membran (12) aufweisenden Filterelementen (4) einen spiralförmigen Verlauf nimmt, und das Abflußrohr (7) am Außenrand der Filterelemente angeordnet ist.

2. Vorrichtung für die Filtration, mit scheibenförmigen Filterelementen, die axial aufeinandergestapelt und innerhalb eines rohrförmigen Mantels konzentrisch um ein Filtratsammelrohr angeordnet sind und mit je einem parallel zum Filtratsammelrohr verlaufenden Einspeis- und Abflußrohr mit Öffnungen versehen sind, dadurch gekennzeichnet, daß das Einspeis- und Abflußrohr (6 bzw. 7) mit mindestens je einer Öffnung (8 bzw. 9) pro Filterelement (4) versehen sind, wobei das Einspeisrohr derart ausgebildet ist, daß der zu filtrierende Stoff durch das am Außenrand der Filterelemente angeordnete Einspeisrohr tangential eingespeist wird, und auf den eine mikroporöse Membran aufweisenden Filterelementen einen spiralförmigen Verlauf nimmt, und das Abflußrohr am Filtratsammelrohr angebracht ist.

3. Vorrichtung nach Anspruch 1 oder 2, dadurch gekennzeichnet, daß die Öffnungen am Abflußrohr größer sind als diejenigen am Einspeisrohr.

4. Vorrichtung nach einem der Ansprüche 1 bis 3, dadurch gekennzeichnet, daß das Filterelement (4) ein Mittelteil (10) mit beidseitig angeordneten Abflußkanälen (13) und je eine darüberliegende poröse Kunststoffschicht (11) aufweist, auf der die mikroporöse Membran (12) angebracht ist.

5. Vorrichtung nach Anspruch 4, dadurch gekennzeichnet, daß die Abflußkanäle (13) trogförmig ausgebildet und schachbrettartig angeordnet sind.

6. Vorrichtung nach Anspruch 4, dadurch gekennzeichnet, daß die poröse Kunststoffschicht (11) eine Porenweite von etwa 40 μm

besitzt.

7. Vorrichtung nach einem der Ansprüche 1 bis 6, dadurch gekennzeichnet, daß das Filterelement (4) eine umlaufende Sammelrinne (14) aufweist, die mit einer Öffnung (16) im Filtrasammelrohr (5) verbunden ist.

## Claims

1. Device for filtration, comprising disc-shaped filter elements stacked axially and concentrically one upon the other within a tubular housing around a filtrate collecting pipe and having each one inlet and one outlet pipe with apertures, said pipes extending parallel to said filtrate collecting pipe, characterized in that the inlet and outlet pipe (6 resp. 7) comprises at least one aperture (8 resp. 9) each for each filter element (4), the inlet pipe being arranged for feeding tangentially the matter to be filtrated through the inlet pipe (6) disposed adjacent to said filtrate collecting pipe (5), establishing a helical flow on said filter elements (4) having a microporous membrane (12), and the outlet pipe (7) is disposed adjacent the periphery of said filter elements.

2. Device for filtration, comprising disc-shaped filter elements stacked axially and concentrically one upon the other within a tubular housing around a filtrate collecting pipe and having each one inlet and one outlet pipe with apertures, said pipes extending parallel to said filtrate collecting pipe, characterized in that the inlet and outlet pipe (6 resp. 7) comprises at least one aperture (8 resp. 9) each for each filter element (4), the inlet pipe being arranged for feeding tangentially the matter to be filtrated through the inlet pipe disposed adjacent to the periphery of said filter elements, establishing a helical flow on said filter elements having a microporous membrane, and the outlet pipe is disposed adjacent to said filtrate collecting pipe.

3. Device according to Claim 1 or 2, characterized in that the apertures in the outlet pipe are larger than the apertures in the inlet pipe.

4. Device according to one of the Claims 1 to 3, characterized in that the filter element (4) has a central portion (10) with flow passages (13) defined in opposite and a porous plastic material layer (11) on each face, with a microporous membrane (12) on it.

5. Device according to Claim 4, characterized in that the flow passages (13) are throughshaped and arranged in a chess-board pattern.

6. Device according to Claim 4, characterized in that the porous plastic material layer (11) has a pore with of about 40 μm.

7. Device according to one of the Claims 1 to 6, characterized in that the filter element (4) has a circular collecting channel (14) which is connected to an aperture (16) in the filtrate collecting pipe (5).

## Revendications

1. Dispositif de filtration avec des éléments de filtrage en forme de disques superposés axialement et disposés concentriquement à l'intérieur d'un manteau tubulaire autour d'un tube d'évacuation de filtrat, ledit dispositif comprenant un tube d'amenée et un tube d'écoulement pourvus chacun d'ouvertures et disposés parallèlement audit tube d'évacuation de filtrat, caractérisé par le fait que les tubes d'amenée (6) et d'écoulement (7) sont pourvus chacun d'au moins une ouverture (8, 9) par élément de filtrage (4), ledit élément comprenant une membrane microporeuse (12), le tube d'amenée (6), disposé au voisinage du tube d'évacuation de filtrat (5), permettant l'introduction tangentielle et un parcours en forme de spirale de la substance à filtrer sur les éléments de filtrage, et par le fait que le tube d'écoulement (7) est disposé à la périphérie desdits éléments.

2. Dispositif de filtration avec des éléments de filtrage en forme de disques superposés axialement et disposés concentriquement à l'intérieur d'un manteau tubulaire autour d'un tube d'évacuation de filtrat, ledit dispositif comprenant un tube d'amenée et un tube d'écoulement pourvus chacun d'ouvertures et disposés parallèlement audit tube d'évacuation de filtrat, caractérisé par le fait que les tubes d'amenée (6) et d'écoulement (7) sont pourvus chacun d'au moins une ouverture (8, 9) par élément de filtrage (4), ledit élément comprenant une membrane microporeuse (12), le tube d'amenée disposé à la péripherie desdits éléments de filtrage permettant l'introduction tangentielle et un parcours en forme de spirale de la substance à filtrer sur lesdits éléments de filtrage, et par le fait que le tube d'écoulement est monté audit tube d'évacuation de filtrat.

3. Dispositif selon l'une des revendications 1 ou 2, caractérisé par le fait que les ouvertures du tube d'écoulement sont plus grandes que celles du tube d'amenée.

4. Dispositif selon l'une des revendications 1 à 3, caractérisé par le fait que l'élément de filtrage (4) comprend une partie médiane (10) avec des canaux d'écoulement (13) de chaque côté et des couches poreuses en matériau synthétique sur lesquelles ladite membrane microporeuse (12) est fixée, lesdites couches étant disposées de part et d'autre de ladite partie médiane.

5. Dispositif selon la revendication 4, caractérisé par le fait que les canaux d'écoulement (13) sont en forme d'auge et disposés en damier.

6. Dispositif selon la revendication 4, caractérisé par le fait que la grandeur des pores de la couche poreuse en matériau synthétique est d'environ 40 μm.

7. Dispositif selon l'une des revendications 1 à 6, caractérisé par le fait que l'élément de filtrage (4) est entouré d'un conduit collecteur (14) relié par une ouverture (16) au tube d'évacuation de filtrat (5).

**FIG.1**

FIG.3

FIG.4

FIG.5

**FIG.2**

**FIG.6**